# EUROPEAN PATENT APPLICATION

(11) **EP 3 684 005 A1**
(43) Date of publication of application: **22.07.2020**
(21) Application number: 19219514.7
(22) Date of filing: 23.12.2019
(51) Int. Cl.: H04L 9/08, H04L 9/32

(54) **METHOD AND SYSTEM FOR RECOVERING CRYPTOGRAPHIC KEYS OF A BLOCKCHAIN NETWORK**

(30) Priority: 18.01.2019 ES 201930030
(71) Applicant: Telefonica Digital España, S.L.U., 28013 Madrid (ES)
(72) Inventor: de la Rocha Gómez-Arevalillo, Alfonso, 28013 Madrid (ES); Nuñez Díaz, José Luis, 28013 Madrid (ES)
(74) Representative: Carlos Hernando, Borja

(57) **Abstract**

Method and system for recovering cryptographic keys of a blockchain network. A computing device or an element associated with the same has stored a pair of cryptographic keys representative of the identity of the user in a blockchain network, including a public key and a private key. An identity manager maintains a registry of the user in a distributed directory. When a request from the user is received due to the loss/theft of their private key, the information on the public key of the user is eliminated from the registry and the user is revoked as the owner of a smart contract, a new pair of keys is generated, stored in the device or in said element; and the user is identified and authenticated. Once correctly authenticated, the manager receives the new public key of the user, updates the registry and updates the ownership of the smart contract.

## Description

### Technical field

The present invention relates in general to smart contracts and security technologies. In particular, the invention relates to a method and a system for recovering cryptographic keys of a blockchain network. The invention implements a mechanism for recovering the cryptographic keys which represent the identity of a user in the blockchain network through the network infrastructure, a series of smart contracts and a computing device operated by the user without compromising security related to the possible theft or improper use of the same by third parties.

### Background of the invention

One of the main problems with managing identities in current blockchain platforms is that if a user loses control over the cryptographic keys, they will lose control over their identity and all the assets associated with it (cryptocurrencies and cryptographic tokens) without there being a reliable way of recovering them without delegating the control of their keys to trusted third parties.

Another problem presented by identities in blockchain networks is that there is no correspondence between the identity of the user in the network and their physical identity, this benefits the privacy of the users in the network since their real identity cannot be inferred based on their identity (public key), but it complicates the implementation of simple mechanisms for managing and recovering keys because they are non-transferrable and only known by the user in question.

To be able to access a blockchain platform, a user should have a pair of asymmetric cryptographic keys which represent their access identity to the network. The public key unequivocally represents the user in the platform and all the actions and transactions that the user carries out via the network will be signed using their private key such that any participant in the network can identify the origin of the action. These keys are generated from a seed known by the user and are stored generally in the personal devices of the users. Moreover, the user is solely responsible for their keys and should try to keep them safe even if they do not have technical expertise. If a user loses access to their seed or their keys, they irrevocably lose control over their identity. In the event that this identity was associated with funds of any type (cryptocurrencies or other type of cryptographic assets) or access rights to a service, the user will not be able to mobilise these funds or access the services.

Currently, the models for recovering blockchain keys of a user require the recovery to be delegated to a trusted third party or relying on a sovereign digital identity model via a specific blockchain platform based on smart contracts:
- Sovereign digital identity models based on blockchain technology enable a user to delegate the recovery process (managed through a smart contract), to trustees. In this manner, a modification of the keys of the user needs to be accepted by a minimum number of trustees.
- Another possible recovery alternative would consist of delegating the storage of the seed of the keys to trusted third parties, such as an online platform, a large company or a group of trustees to which one part of the seed is distributed to each one.

However, managing identity keys on current blockchain platforms is very inefficient. The keys are generated from a random seed (random alphanumeric sequence) and the users must generate it, manage it and store it themselves. To do so, they can use wallet software (i.e. wallets installed by way of software on computing devices) which stores and manages the pair of keys or it uses specialised hardware which needs to be introduced on a device each time that they wish to sign a transaction.

The wallet software generates and stores the keys directly on the device on which the software is installed. This benefits the user experience since, because the keys are stored in the device, each time a transaction is initiated in the blockchain network, it can be signed directly from the device. This solution presents security problems: storing the keys directly via a device connected to the internet makes it vulnerable to cyberattacks, a hacker who obtains control of the device could easily obtain access to the keys and take control of the identity in the network.

Moreover, the wallet hardware consists of device hardware with a specific purpose (with a similar aspect to that of a USB flash drive) which stores the keys of the users. The security of these devices is greater than that of wallet software due to the fact that they are coded in an offline device, but the drawback with these types of solutions is the user experience. Each time they wish to perform a transaction with the identity by way of a device, the wallet hardware needs to be connected, the keys decoded and the transaction signed in the wallet in order to send the signed transactions to the devices and launch them on the network.

These types of solutions for managing keys in blockchain networks present a problem still not resolved in the ecosystem, since if the user loses control of their keys (either because they lose their wallet hardware or the device on which the wallet software is installed and the keys stored), they will completely lose control over their identity, with everything this entails. The main problems of the mechanisms for recovering keys that exist at present are the following:
- In order to avoid the loss of their keys, a user can opt to store the alphanumeric sequence to generate their keys (the seed) in a secure offline device (either safeguarding it in a plain text file stored on an offline hard disc or writing it directly onto a piece of paper), or following a similar approach, safeguarding their public and private keys directly to be able to regenerate them in the event of loss. This involves significant inconvenience and is not a reliable method since errors may be made when transcribing the keys or the offline storage may be lost, the identity being lost once again irreversibly.
- Sovereign digital identity models based on blockchain technology introduce some key recovery mechanisms, but these methods should be carried out onchain (that is to say, all the actions for recovering identities need to be carried out via the blockchain platform by initiating transactions via the network and using smart contract without their real identity coming into play) and requiring the trustees of the identity to have a series of valid keys (with the risk of losing keys which these users also have) such that if more than a minimum number of trustees lose their identities, the key would be irrecoverable.
- The problem of delegating keys to third parties is the excess of trust which must be given to them. Delegating the seed or the private key of a user means that their identity can be directly supplanted. In addition, this violates the paradigm of decentralisation of blockchain technology. Blockchain networks are considered a decentralised infrastructure with distributed trust in which the intermediaries and trusted third parties are eliminated. The delegating of keys to a trusted entity would involve breaking with the paradigm introduced by the technology.

Additionally, there is no easy way to perform correspondence between the unique digital identity of the user and their physical identify without using trusted third parties or additional applications.

### Description of the invention

The present invention provides according to a first aspect, a method for recovering cryptographic keys of a blockchain network in which a computing device of a user, for example a mobile phone or a tablet, among others, or an element associated with the computing device, has stored a pair of asymmetric cryptographic keys representative of the identity of said user in at least one cited blockchain network, said pair of keys including a public key and a private key. At the same time, an identity manager, operatively connected to the blockchain network, maintains a registry of the user in a distributed directory of identities. The cited registry includes information on the public key of the user and a smart contract of the user in the blockchain network.

Particularly, the method comprising eliminating, by the identity manager, from the cited registry, the information on the public key of the user and revoking the user as the owner of the smart contract when a request is received from the user due to the loss or theft of their private key; generating, by the computing device or in the element associated with the computing device, a new pair of asymmetric cryptographic keys representative of the identity of the user in the blockchain network in which said new pair of keys comprises a new public key and a new private key; storing the new pair of keys generated in the computing device or in the element associated with the computing device; identifying and authenticating the user by the identity manager, by means of an authentication mechanism provided by a guarantor entity of the identity; and once the user has been authenticated correctly, receiving by the identity manager, from the computing device, the new public key of the user and updating the registry of the user in the distributed directory of identities with the new public key received and updating the new public key with the ownership of the smart contract.

In one exemplary embodiment, the element associated with the computing device is a SIM card, the guarantor entity of the identity of the user being the telecommunications operator who issued the SIM card. Alternatively, the element associated with the computing device can be an electronic identification document of the user, for example, the ID card. In this latter case, the guarantor entity of the identity of the user would be the state who issued the ID card.

Particularly, the cited registration is implemented by means of an identification sequence including: an identifier of the user, an identifier of the smart contract of the blockchain and the public key. In cases where the public key of the user does not match the address of the identifier of the user in the blockchain, the cited identification sequence could also include the cited address.

In one exemplary embodiment, the authentication mechanism comprises the sending of a single-use code by means of a text message to the computing device. The authentication mechanism can comprise the use of a web service which authenticates the user by means of introducing their telephone number in said web service and then confirming the identity of the user with the computing device.

In another exemplary embodiment, the authentication mechanism comprises the use of a biometric authentication system of the user.

In one exemplary embodiment, the generation of the new pair of cryptographic keys is conditioned upon the acceptance and validation of the same by a third party. The generation of the new pair of cryptographic keys can be carried out by a cryptographic mechanism in which the user, the operator of the blockchain network and optionally the third party share part of a seed to generate the new pair of cryptographic keys.

The present invention provides, according to a second aspect, a system for recovering cryptographic keys of a blockchain network. The elements/modules/units/devices making up the system of the second aspect are adapted and configured to implement/execute the method of the first aspect of the invention.

Therefore, the present invention uses the infrastructure of a blockchain network, a computing device of a user, a form of unique electronic identification (such as a SIM or an electronic ID card) and a user authentication system to carry out the correspondence between physical identity (using the electronic identification) and digital identity (identity in blockchain networks) and carry out the secure management and recovery of the keys of the user.

The invention enables the regeneration and recovery of the keys of a user to be carried out without delegating the control or storage of the cryptographic keys to a third party. Thus far, a technical mechanism has not been implemented which enables the recovery of the identity of a user in systems based on blockchain technology faced with the loss of the generation seed of the keys and the keys themselves.

Furthermore, the invention provides an assignment and correspondence mechanism of the digital identity of a user with their physical identity by way of a physical element (for example the SIM card of a device) enabling the barrier between the physical and digital world to be overcome which involves significant friction in the development of many proposals of solutions based on blockchain.

Lastly, the invention provides a key recovery model extendible to multiple blockchain platforms and different contexts, unlike all the recovery proposals based on sovereign digital identity based on current blockchains which are very much linked to the platforms via which they are implemented.

### Brief description of the drawings

The previous and other features and advantages will be more easily understood from the following detailed description of exemplary embodiments, which is merely illustrative and non-limiting, with reference to the drawings that accompany it, in which:
Fig. 1 schematically illustrates the architecture of the proposed system according to one exemplary embodiment.
Fig. 2 schematically illustrates the architecture of the system with two independent blockchain networks according to one exemplary embodiment.
Fig. 3 is a diagram which shows the creation of a new identity according to one exemplary embodiment.
Fig. 4 is a diagram which illustrates the key revocation and recovery process according to one exemplary embodiment.

### Detailed description of the invention and exemplary embodiments

The present invention presents a hybrid between the key recovery models used by the sovereign digital identity models by way of a smart contract and the third-party key delegation models without there being any need to delegate the seed or the private key at any time. The invention is compatible with any blockchain network that enables the execution of smart contracts.

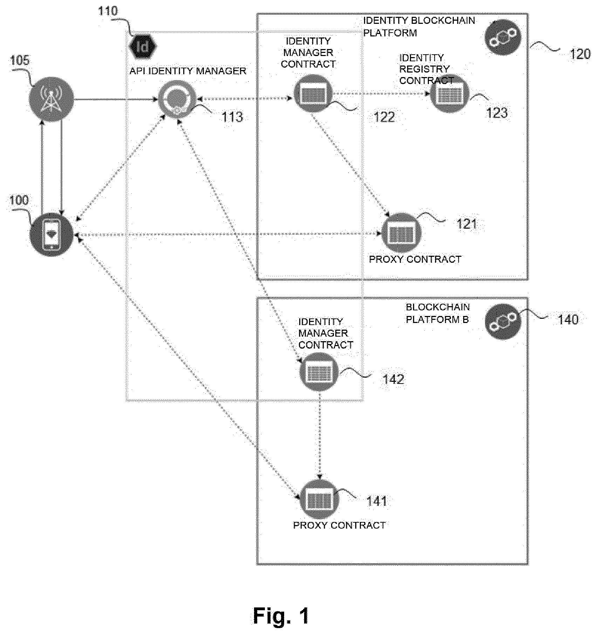

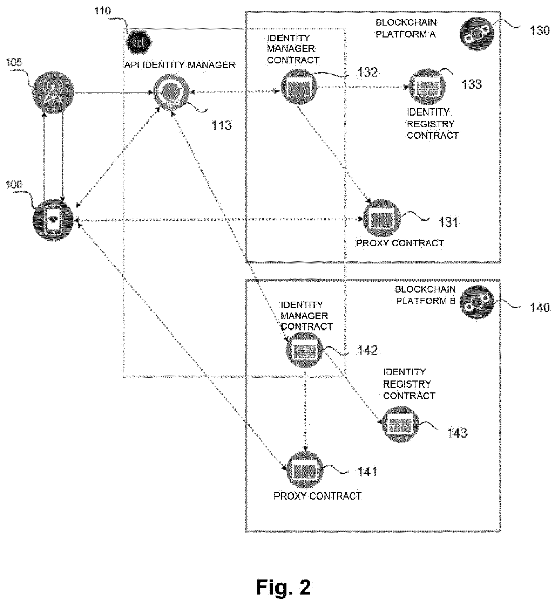

Fig. 1 shows an exemplary embodiment of the architecture of the proposed system. The system includes or uses:
- Pair of cryptographic keys: these represent the keys for the control of the identity of a user 1 in different blockchain platforms in which they participate. In order to generate them, cryptographic material stored in a SIM card 101 of a computing device 100 (for example a smartphone, among others) of a user 1 is used as a seed. The keys can be generated and stored directly on the SIM card 101 (without them leaving it at any time as if they were wallet hardware) or the user can generate their own personal keys and store them directly on the computing device 100. The implementation of the present invention will be the same regardless of the origin and manner of storing the keys by the user 1. The main difference between the keys of the user 1 being stored and generated on the SIM 101 or on the computing device 100 is the level of security, the storage of keys on the SIM 101 is equivalent to the level of security of wallet hardware, while if the user 1 generates and stores their keys directly on their computing device 100, they will obtain a level of security of the keys equivalent to that of wallet software.
- Identity blockchain platform 120: it is the main blockchain network for managing identities of the operators, that is to say, the default blockchain infrastructure of the system. In this network, the directory of the identities of the user 1 in the different blockchain networks where their identity is used, is managed. This network 120 serves to integrate all the blockchain identities of the user 1, however, this invention can be implemented directly via independent blockchain networks without needing this main network 120 (the only difference will be that instead of there being a single identity registry 123 in the main blockchain network 120, there will be an identity registry 133, 143 in each independent blockchain network 130, 140. See Figure 2).
- Identity manager 110: the system responsible for managing the identities. Only the provider of the identity infrastructure (the operator), by way of valid identity management keys, can use said identity manager. The identity manager 100 is particularly made up two modules:
   ∘ A unique API 113 which listens to events in the network 105 (such as the registration of a new SIM in the infrastructure or its revocation), initiates the authentication and identification process of the user 1, and serves as a bridge for the operators (trusted entities) between the network infrastructure 105, the physical world and the different blockchain networks 120, 130, 140.
   ∘ An identity manager smart contract 122, 132, 142 in each one of the blockchain networks 120, 130, 140 to which the system is connected, which serves as a gateway for operators or trusted entities (their unique identity in the network) to carry out updates on the identity directory contract (in the main blockchain platform 120) and to return the control of their proxy contract 121, 131, 141 to the user 1 who has generated their keys.
- Proxy contract 121, 131, 141: smart contract for the different blockchain network infrastructures 120, 130, 140 which represent the identity of the user 1 in each one of the networks. The logic of the smart contracts enables the initiation of functions to be limited so that it is only possible by way of transactions signed by a specific identity as the owner of the contract. This is determined in the implementation of the contract defining the address of the user 1 (that is to say the public key) for which it enables transactions signed with their private key to execute the function. The owners of this proxy contract 121, 131, 141 are the user 1, by way of their pair of control keys, and the identity manager 110. This contract has two main functionalities:
   ∘ Delegating the signing of all the transactions of the user 1 (the transactions sent to the contract signed using the control keys of the user 1). This enables all the actions carried out via the blockchain network 120, 130, 140 to now not belong directly to the pair of keys of the user 1, but rather to this smart contract. This function of the contract can only be initiated by way of a transaction signed using the active keys for the user 1 who owns the proxy contract 121, 131, 141.
   ∘ Owner update functionality of the contract. Can only be initiated by the identity manager 110 (by way of a transaction signed by the identity manager contract 110 who can only be named using the cryptographic keys of the operators, or trusted distributed entity). This function updates a new pair of keys with the control of the proxy contract 121, 131, 141 modifying the owner of the proxy contract 121, 131, 141.
- Identity registry 123, 133, 143: it serves as a distributed identity directory. It registers particularly all the identities of the system by way of the following tuple: (unique_ID (e.g. MSISDN, electronic ID), Proxy Contract Blockchain A, Address A, Public Key A [, Proxy Contract Blockchain B, Address B, Public Key B,..., Proxy Contract Blockchain N, Address N, Public Key N]). This registry (which in turn is a smart contract 123, 133, 143 for the networks 120, 130, 140) can only be managed by the identity manager 110 (the operator, or trusted entity, responsible for the user 1), and the only available functionalities are the creation, modification and revocation of user identities. In one exemplary embodiment, this registry only resides in the main blockchain network 120 and registers information of all the blockchain networks for the identity of the user 1. Alternatively, if a design pattern of the independent blockchain system 130, 140 (Fig. 2) is decided, there is an independent identity registry 133, 143 in each network and the tuple for each user 1 would only register information via this network, the resulting tuple in this case being the following: (unique_ID (e.g. MSISDN, electronic ID), Proxy Contract Blockchain, Address, Public Key).
- User authentication system of the operator, or in general, of the identity guarantor entity (not illustrated in the figures): it is used as the offchain secure authentication system (external and independent from the blockchain networks) of the operators and serves as a correspondence mechanism between the physical and digital identity. It makes up the API 113 (offchain module) of the identity manager 110. Each operator, by way of the API 113 of the identity manager 110, can select the authentication system they want to use to identify their users. The API 113 would launch a request to the corresponding authentication system which would answer the identity manager 110 with the result of the authentication of the user 1. The authentication processes which can be used by the present invention include sending a single-use code by means of a text message (such as an SMS) to the computing device 100 verifying the user 1, the use of authentication solutions of the operators such as Mobile Connect (https://mobileconnect.io), or even the use of biometric authentication systems.

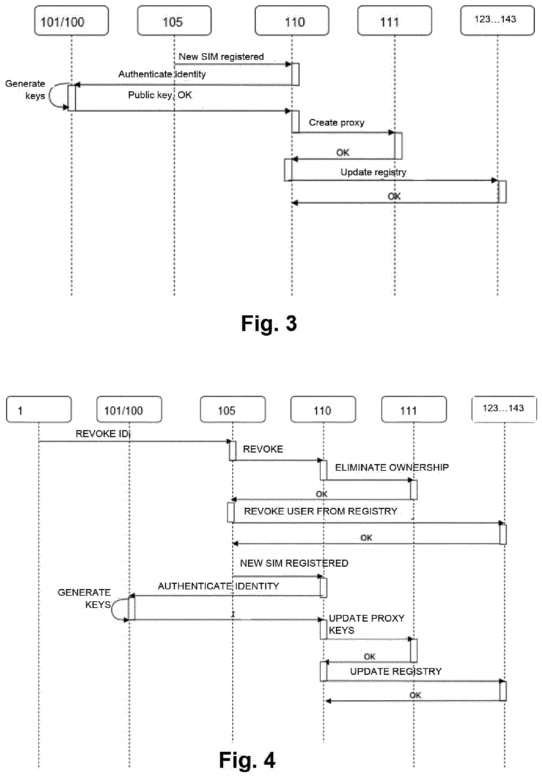

Now in relation to Fig. 3, which shows an exemplary embodiment of the creation of a new identity. When the user 1 receives their new SIM 101, a new pair of asymmetric cryptographic keys is generated from cryptographic material of the SIM 101. The keys can be generated and stored directly on the SIM card 101 (in the manner of wallet hardware) without the user 1 having to carry out any action or they can decide to generate their own pair of keys with an algorithm of their choice.

When a SIM 101 is delivered and activated on the network 105, it informs the identity manager 110. The identity manager 110, by way of the relevant authentication mechanism, launches an identification process of the user 1 to the telephone number for which the SIM card 101 has been registered. If the user 1 is satisfactorily authenticated, the computing device 100 of the user 1 will securely transmit their new public key to the identity manager 110 and the identity manager will proceed with the deployment of the proxy contract 121 of the user 1, making the user the owner of the contract by way of their public key and proceed with updating the tuple of the user 1 in the identity registry 123. From this moment, the proxy contract 121 represents the sovereign identity of the user 1 in the system. If the user 1 were using their identity on more than one blockchain platform (and not only on the main identity blockchain platform 120), then a new proxy contract 133, 143 will be deployed for the user 1 in each blockchain network 130, 140 in which the user 1 is participating, updating the identity registry 133, 143 accordingly.

Fig. 4 shows the key revocation and recovery process according to an exemplary embodiment. If the user 1 loses the control of their keys (misplaces the computing device 100 that stores their keys, the SIM 101 is stolen, or they lose control of their private keys, etc.) the recovery process of the identity would particularly be the following. Firstly, the user 1 communicates the loss of the keys and the operator responsible for the user 1 informs the network 105 of the elimination of the correspondence between the SIM card 101, public key and telephone number of the user 1 (either due to the loss of keys, SIM 101 or both, among others). When the network 105 detects an elimination event of SIM 101, it informs the identity manager 110 which undertakes, for the user 1 responsible for the event, to eliminate (revoke) the user 1 as owner of all the proxy contracts 121, 131, 141 of the relevant blockchain networks 120, 130, 140 and to eliminate the public key in the identity directory 123, 133, 143. Subsequently, the user 1 is provided with a new SIM card 101 and from the cryptographic material on this new SIM card a new pair of public/private keys is generated for each of the blockchain networks 120, 130, 140, as it would occur with the creation of a new user 1. The activation of the new SIM 101 initiates a new event in the network 105 which informs the identity manager 110 responsible for launching the authentication process. Similarly, as it would occur with the creation of a new identity, the identity manager 110 identifies the user 1 and the computing device 100 securely transmits their public key recently generated at the time of receiving the SIM 101. If the authentication is correct, that is to say the user has been correctly authenticated (for example by way of a user/password mechanism in which the user 1 says who they are, that is to say it is identified by means of the user and they demonstrate this by authenticating themselves with the password), the operator in question, by way of the identity manager 110, updates the identity directory 121, 131, 141 with the new public key for the user 1 and updates the new keys with the owner of the proxy contract 121, 131, 141. In this manner, the user 1 would completely recover the control of their identity with their new keys.

It is important to take into account that the public key of the user 1 is generated in the SIM card 101 of their computing device 100 (except for when they decide to generate their own keys) and the guarantor entity for the identity of the user 1 at no point has access to the private key of the user 1, it only acts as a user management and authentication system and the only piece of the identity of the user 1 that they know is the public key. When a satisfactory authentication is carried out, an applet on the SIM card 101 is responsible for extracting and securely transmitting the public key to the identity manager 110 so that information about the pair of keys cannot be leaked to the device 100 (the key can be stored in the SIM 101 or directly on the device 100 as a function of the management of the keys selected by the user 1). Consequently, in spite of the operator being a trusted third party in the recovery process of the keys, at no point are they capable of taking control of the proxy contract 121, 131, 141 and therefore of the identity of the user 1.

It should be pointed out that the present invention is not limited to being implemented by operators as providers of the identity management system and as reliable identity guarantors, but rather other trusted entities can play this role in both roles.

In this sense, in other exemplary embodiments, the invention could be based on any reliable identity guarantor entity which is supported via a secure user identification system. Thus, an electronic identification document could be used, for example an electronic ID card, as the unique identification and authentication system of the user 1 (the state in this case being the identity guarantor entity) such that if the user 1 loses their keys, they could be authenticated by way of their electronic ID card.

Similarly, the system for managing the identity of the present invention could be managed by any other reliable organisation. Faced with losing their keys, if the authentication of the user 1 were satisfactory, their new public key would be securely sent to the identity manager 110 who would be responsible for communicating with the corresponding infrastructure to return control of their identity to the user 1.

As an additional functionality, the present invention enables the use of a web service for authenticating users by means of using their telephone number in the web service, for example Mobile Connect as a physical authentication for the sovereign digital identity (when enabling access to the keys, granting access permissions to the data or validating various actions via the sovereign digital identity).

Additionally or alternatively, in other exemplary embodiments, more complex mechanisms can be used to recover the keys such that not only can the user 1 and the operator use it (with the generation of a new SIM 101 and the return of control of the proxy contract 121, 131, 141 to the user 1), but rather the user 1 can assign a series of trustees who must also accept and validate the recovery and generation of new identity keys for a user 1 (using the authentication system of their relevant operators, thus enabling the trust and the recovery process of the keys to be distributed even further). That is to say, the generation of the new pair of cryptographic keys can be conditioned upon the acceptance and validation of the same by a third party. For example, in a company it may be necessary for two or more representatives of the company to validate the generation of new keys.

Similarly, a key generation system can be used where it is now not the user 1, by way of the SIM 101, who generates the keys for the identity, but rather a cryptographic mechanism by way of which the user 1, the operator and if necessary the trustees, share parts of the seed in order to be able to regenerate the keys of the user 1.

The proposed invention can be implemented in hardware, software, firmware or any combination of the same. If it is implemented in software, the functions can be stored in or encoded as one or more instructions or code in a computer-readable medium.

The scope of the present invention is defined in the attached claims.

## Claims

1. A method for recovering cryptographic keys of a blockchain network, wherein a computing device (100) of a user (1) or an element (101) associated with the computing device (100) has stored a pair of asymmetric cryptographic keys representative of the identity of said user (1) in at least one blockchain network (120, 130, 140), said pair of keys including a public key and a private key, and wherein an identity manager (110), operatively connected to the blockchain network (120, 130, 140), which is at least one, maintains a registry of the user (1) in a distributed directory of identities (123, 133, 143), wherein said cited registry includes information on the public key of the user (1) and at least one smart contract (121, 131, 141) of the user (1) in the blockchain network (120, 130, 140), the method comprising:
- eliminating, by the identity manager (110), from said registry, the information on the public key of the user (1) and revoking the user (1) as the owner of the smart contract (121, 131, 141) when a request is received from the user (1) due to the loss or theft of the private key of their identity;
- generating, by the computing device of the user (100) or by the element associated with the computing device (101), a new pair of asymmetric cryptographic keys representative of the identity of the user (1) in the blockchain network (120, 130, 140) wherein said new pair of keys comprises a new public key and a new private key;
- storing said new pair of keys generated in the computing device (100) of the user (1) or in said element (101) associated with the computing device (100);
- identifying and authenticating the user (1) by the identity manager (110), by means of an authentication mechanism provided by a guarantor entity of the identity; and
- once the user (1) has been authenticated correctly, receiving by the identity manager (110), from the computing device (100), the new public key of the user (1) and updating the registry of the user (1) in the distributed directory of identities (123, 133, 143) with the new public key received and updating the new public key with the owner of the smart contract (121, 131, 141).

2. The method according to claim 1, wherein the element (101) comprises a SIM card and wherein said guarantor entity of the identity of the user (1) is the telecommunications operator who issued said SIM card.

3. The method according to the preceding claims, wherein the registration in the distributed directory of identities is carried out by means of an identification sequence which includes: an identifier of the user (1), an identifier of the smart contract of the blockchain and the public key.

4. The method according to the preceding claims, wherein said authentication mechanism comprises the sending of a single-use code by means of a text message to the computing device (100).

5. The method according to claims 1 to 3, wherein said authentication mechanism comprises using a web service which authenticates the user (1) by means of introducing their telephone number into said web service and then confirming the identity of the user (1) with the computing device (100).

6. The method according to claims 1 to 3, wherein said authentication mechanism comprises using a biometric authentication system of the user (1).

7. The method according to claim 1, wherein the element (101) comprises an electronic identification document of the user (1).

8. The method according to claim 1, wherein the generation of the new pair of cryptographic keys is conditioned upon the acceptance and validation of the same by a third party.

9. The method according to claim 1 or 8, wherein the generation of the new pair of cryptographic keys is carried out by a cryptographic mechanism, wherein the user (1), the operator of the blockchain network (120, 130, 140) and optionally said third party share part of a seed to generate the new pair of cryptographic keys.

10. A system for recovering cryptographic keys of a blockchain network, comprising:
- at least one blockchain network (120, 130, 140);
- a computing device (100) of a user (1) and/or an element (101) associated with the computing device (100), configured to store a pair of asymmetric cryptographic keys representative of the identity of said user (1) in said blockchain network (120, 130, 140) which is at least one, including said pair of keys, a public key and a private key;
- an identity manager (110), operatively connected to the blockchain network (120, 130, 140) and configured to maintain a registry of the user (1) in a distributed directory of identities (123, 133, 143), wherein said registry includes information on the public key of the user (1) and at least one smart contract (121, 131, 141) of the user (1) in the blockchain network (120, 130, 140); and
- a guarantor entity of the identity of said user (1);
wherein the identity manager (110) is also configured to:
- eliminate, from said registry, the information on the public key of the user (1) and revoke the user (1) as the owner of the smart contract when a request is received from the user (1) due to the loss or theft of their private key, wherein the computing device (100) of a user (1) and/or the element (101) associated with the computing device (100) is configured to generate a new pair of asymmetric cryptographic keys representative of the identity of the user (1) in the blockchain network (120, 130, 140), said new pair of keys comprising a new public key and a new private key, and wherein the computing device (100) or said element (101) associated with the computing device (100) is configured to store said new pair of generated keys;
- identify and authenticate the user (1) by means of an authentication mechanism provided by a guarantor entity of the identity; and
- once the user (1) has been authenticated correctly, receive, from the computing device (100), the new public key of the user (1) and update the registry of the user (1) in the distributed directory of identities (123, 133, 143) with the new public key received and update the new public key with the owner of the smart contract (121, 131, 141).

11. The system according to claim 10, wherein the element (101) comprises a SIM card and wherein said guarantor entity of the identity of the user (1) is the telecommunications operator who issued said SIM card.

12. The system according to claim 10, wherein the element (101) comprises an electronic identification document of the user (1).

13. The system according to claim 10, wherein the identity manager (110) is configured to carry out said registration by means of an identification sequence including: an identifier of the user (1), an identifier of the smart contract of the blockchain and the public key.
